(19)

Europäisches
Patentamt
European
Patent Office
Office européen
des brevets

(11) **EP 4 418 574 A1**

(12) **EUROPEAN PATENT APPLICATION**

(43) Date of publication:
**21.08.2024  Bulletin 2024/34**

(21) Application number: **24154742.1**

(22) Date of filing: **30.01.2024**

(51) International Patent Classification (IPC):
**H04B 17/345** (2015.01)

(52) Cooperative Patent Classification (CPC):
**H04B 17/345;** H04B 17/354

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.02.2023  FI 20235147**

(71) Applicant: **Nokia Technologies Oy
02610 Espoo (FI)**

(72) Inventors:
• **BLÜCHER BRINK, Stig
Aalborg (DK)**
• **NIELSEN, Kim
Storvorde (DK)**
• **JALILI, Feridoon
Gistrup (DK)**
• **DHERE, Amol
Gistrup (DK)**

(74) Representative: **Nokia EPO representatives
Nokia Technologies Oy
Karakaari 7
02610 Espoo (FI)**

(54) **USER EQUIPMENT REPORTING OF MAXIMUM SENSITIVITY DEGRADATION**

(57)    Systems, methods, apparatuses, and computer program products for reporting by a user equipment of maximum sensitivity degradation and relaxation values thereof. A method comprises receiving a request message related to capability of the apparatus, wherein the request message includes maximum sensitivity degradation information of the apparatus corresponding to an operational situation of the apparatus; responding to the request message with a response message, wherein the response message indicates the maximum sensitivity degradation value corresponding to said operational situation of the apparatus; and utilizing self-measurements during said operational situation of the apparatus to determine a new maximum sensitivity degradation value which replaces the current maximum sensitivity degradation value corresponding to the operational situation of the apparatus.

EP 4 418 574 A1

**Description**

FIELD:

Some example embodiments may generally relate to communications including mobile or wireless telecommunication systems, such as Long-Term Evolution (LTE) or fifth generation (5G) radio access technology or new radio (NR) access technology, or other communications systems including subsequent generations of the same or similar standards.

BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. A 5G system is mostly built on a 5G new radio (NR), but a 5G (or NG) network can also build on the E-UTRA radio. From release 18 (Rel-18) onward, 5G is referred to as 5G advanced. It is estimated that NR provides bitrates on the order of 10-20 Gbit/s or higher and can support at least service categories such as enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 5G, which can provide both NR and LTE (and LTE-Advanced) radio accesses. It is noted that, in 5G, the nodes that can provide radio access functionality to a user equipment (i.e., similar to the Node B, NB, in UTRAN or the evolved NB, eNB, in LTE) may be named next-generation NB (gNB) when built on NR radio and may be named next-generation eNB (NG-eNB) when built on E-UTRA radio. 6G is currently under development and may replace 5G and 5G advanced.

SUMMARY:

An embodiment may be directed to an apparatus. The apparatus may include at least one processor and at least memory storing instructions. The instructions, when executed by the at least one processor, may cause the apparatus at least to receive a request message related to capability of the apparatus, wherein the request message includes maximum sensitivity degradation information of the apparatus corresponding to an operational situation of the apparatus; respond to the request message with a response message, wherein the response message indicates the maximum sensitivity degradation value corresponding to said operational situation of the apparatus; and utilize self-measurements during said operational situation of the apparatus to determine a new maximum sensitivity degradation value which replaces the current maximum sensitivity degradation value corresponding to the operational situation of the apparatus.

An embodiment may be directed to a method. The method may include receiving a request message related to capability of the apparatus, wherein the request message includes maximum sensitivity degradation information of the apparatus corresponding to an operational situation of the apparatus; responding to the request message with a response message, wherein the response message indicates the maximum sensitivity degradation value corresponding to said operational situation of the apparatus; and utilizing self-measurements during said operational situation of the apparatus to determine a new maximum sensitivity degradation value which replaces the current maximum sensitivity degradation value corresponding to the operational situation of the apparatus.

An embodiment can be directed to an apparatus. The apparatus may include means for receiving a request message related to capability of the apparatus, wherein the request message includes maximum sensitivity degradation information of the apparatus corresponding to an operational situation of the apparatus; means for responding to the request message with a response message, wherein the response message indicates the maximum sensitivity degradation value corresponding to said operational situation of the apparatus; and means for utilizing self-measurements during said operational situation of the apparatus to determine a new maximum sensitivity degradation value which replaces the current maximum sensitivity degradation value corresponding to the operational situation of the apparatus.

BRIEF DESCRIPTION OF THE DRAWINGS:

For proper understanding of example embodiments, reference should be made to the accompanying drawings, wherein:

Fig. 1 illustrates an example of how uplink harmonics may affect communication;
Fig. 2 illustrates an example of how harmonic mixing may affect communication;
Fig. 3 illustrates an example of how cross band may affect communication;
Fig. 4 illustrates an example of how intermodulation distortion may affect communication;
Fig. 5 illustrates an example method according to certain embodiments; and
Figs. 6a, 6b, 6c and 6d show some estimation examples;
Fig. 7 illustrates an example block diagram of a system, according to an embodiment.

DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for providing static reporting by a user equipment of maximum sensitivity degradation and relaxation values thereof based on specific network configurations and capabilities of the user equipment, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Certain embodiments may have various aspects and features. These aspects and features may be applied alone or in any desired combination with one another. Other features, procedures, and elements may also be applied in combination with some or all of the aspects and features disclosed herein.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

Certain embodiments relate to radio frequency (RF) handling for new radio (NR) frequency range 1 (FR1). Certain embodiments, however, may also be applicable to other wireless communications, with NR and FR1 being examples for the purposes of illustration. More particularly, certain embodiments may be applicable to evolved universal mobile telecommunications system (UMTS) terrestrial radio access network (E-UTRAN) NR - dual connectivity (DC) (EN-DC).

There may be benefit in having a lower maximum sensitivity degradation (MSD) for inter-band carrier aggregation (CA)/EN-DC/DC combinations. A limited set of band combinations, such as from two to four band combinations, may be selected to cover all types of MSD phenomena: harmonic, harmonic mixing, intermodulation distortion (IMD), and cross-band isolation, for example.

MSD can refer to a positive delta in dB to a reference sensitivity level in dBm. MSD relaxation can refer to an improvement of the MSD value that improves the reference sensitivity (Refsens) relative to a 3GPP-specific MSD. For example, if a Refsens: -98dBm, then for an MSD value: 30dB, there will be a resulting Refsens: -68dBm. If there is an MSD relaxation: 5dB, then the new MSD Value: 30-5dB = 25dB, resulting in a new Refsen: -73dBm (a relaxation).

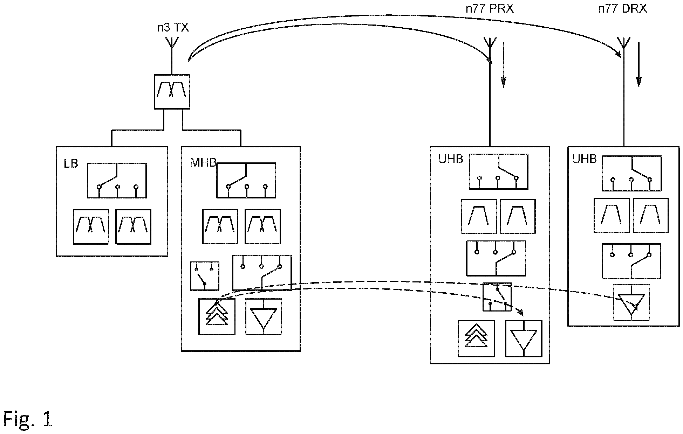

For these carrier aggregation configurations there may be four phenomena, respectively illustrated and discussed in Figs. 1-4, that may cause further exceptions to the sensitivity requirements of the UE that may allow relaxations that make the CA combinations less attractive to operators. Since some of these relaxations may be too conservative, it may be valuable to find ways to allow the UE to signal that the UE has performance that goes beyond the specification requirements, namely the sensitivity relaxations for the band combinations causing MSD. This signaling may be attractive to UEs, since they may be configured with CA combinations the network otherwise would not use, while the network may benefit from the UEs that in fact have better HW and receiver performance.

There are different types of sources in the UE that lead to maximum sensitivity degradation relaxation, but they may be regarded as belonging to two different groups. Those sources of MSD relaxation where only one uplink (UL) component carrier is used in a band combination and those that have two uplink component carriers.

UL harmonics may cause self-interference in another downlink (DL) component carrier (CC) since the harmonic of the uplink CC may fall inside the other DL component carrier bandwidth.

Harmonic mixing may cause self-interference when a combination of the UL harmonic coincides with the DL harmonic of the other DL component.

Cross band is an example of self-interference in which the output spectrum of the UL component carrier falls inside the other DL component carrier bandwidth.

Inter-modulation distortion can occur when two UL component carriers inter-modulate or mix and the product of the mixing of the UL component carriers falls inside the receiver band of one or the other DL component carrier bandwidth.

The MSD relaxations are captured, among other places, in third generation partnership project (3GPP) technical specification (TS) 38.101-1 section 7.3A.

Fig. 1 illustrates how uplink harmonics may affect communication. UL harmonics may cause self-interference in the other DL component carrier since the harmonic of the uplink CC may fall inside the other DL component carrier bandwidth. An example case of UL harmonic happening in the CA combination CA_n3-n77 is found in Fig. 1, where the second harmonic of n3 (1710 - 1785MHz) falls inside n77 (3300 - 4200MHz). Thus, Fig. 1 provides an example case of an RF system that suffers from self-interference 2 x n3TX = n77RX. It can be seen from Fig. 1 that there can be at least two mechanisms of a design that may cause the self-interference: printed circuit board (PCB) isolation and antenna isolation. Both of these mechanisms may serve in some way to suppress the level of interference that originates from the transmitting power amplifier (PA).

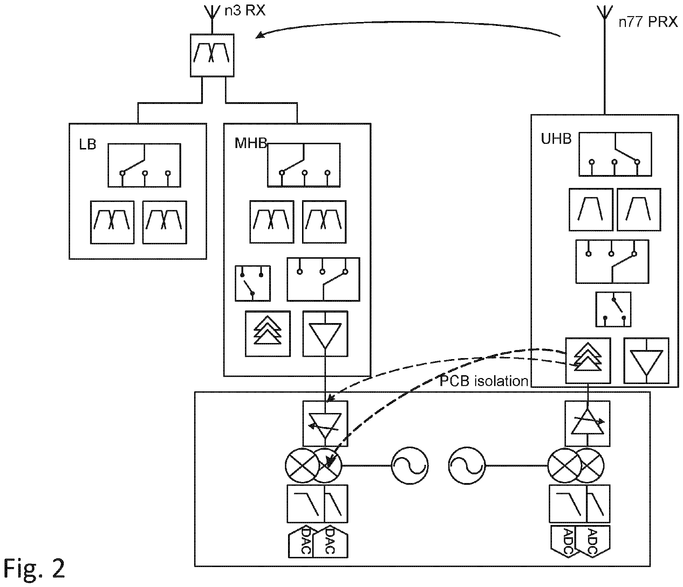

Fig. 2 illustrates how harmonic mixing may affect communication. Harmonic mixing may cause self-interference when a combination of the UL harmonic coincides with the DL harmonic of the other DL component. CA_n3-n77 and CA_n2-n71 (CA_n25-n71) are band combinations whose 2nd or 3rd order harmonic mixing have been studied with respect to harmonic mixing. Thus, Fig. 2 illustrates an example case of an RF system that suffers from self-interference in the form of harmonic mixing.

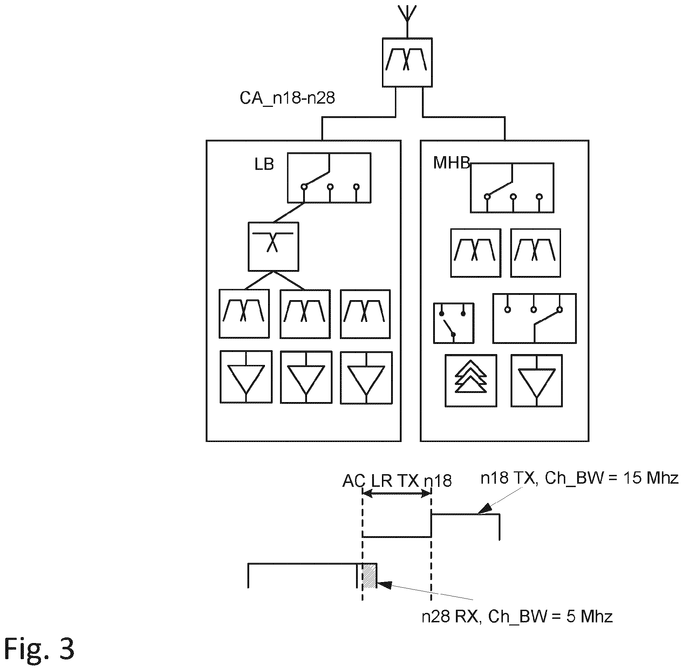

Fig. 3 illustrates how cross band may affect communication. Cross band can be an expression of self-interference in which the output spectrum of the UL component carrier falls inside the other DL component carrier bandwidth. Example cases of cross band isolation with highest MSD specified in 3GPP include CA_n18-n28 (ACLR of n18 TX is co-channel to n28 RX) and CA_n7-n40 (3ACLR of n40 is co-channel to n7 RX). Thus, Fig. 3 provides an illustration of an example case of an RF system that suffers from self-interference in the form of cross-band interference.

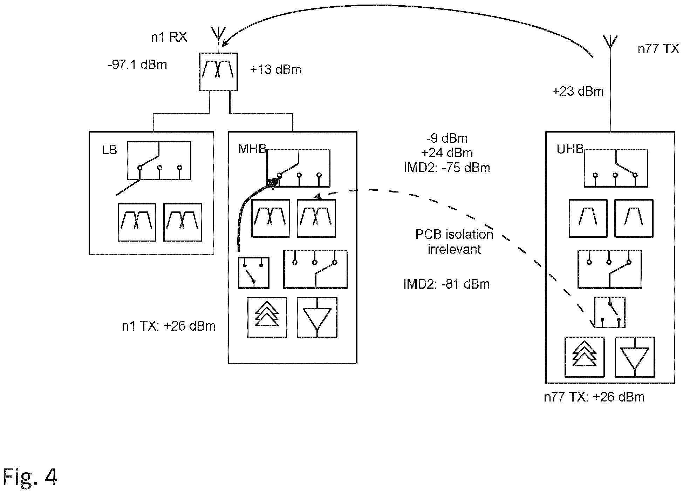

Fig. 4 illustrates how intermodulation distortion may affect communication. Intermodulation distortion can occur when two UL component carriers inter-modulate or mix and the product of the mixing of the UL component carriers falls inside the receiver band of one or the other DL component carrier bandwidth. Thus, Fig. 4 illustrates an example case of an RF system that suffers from self-interference in the form of IMD2 interference.

In a reference sensitivity scenario, the baseband Signal to Interference and Distortion (SINAD) ratio for the UE receiver can be expressed as:

$$SINAD = \frac{P_{\tilde{y}}}{P_{\tilde{x}} + P_N}$$

where,

$P_{\tilde{y}}$ is the power of the received DL signal,
$P_{\tilde{x}}$ is the power of the self-interference, and
$P_N$ is the additive white Gaussian noise (AWGN) power.

In the receive bands where the self-interference is negligible, i.e. $P_N \gg P_{\tilde{x}}$, the reference sensitivity level, $P_{RefSens,}$ is determined by the receiver noise floor level, $P_{NoiseFloor}$:

$$P_{\tilde{y}} = P_{RefSens} = SNR_{RefSens} \cdot P_{NoiseFloor}$$

When self-interference is present, the level of $P_{\tilde{y}}$ required to deliver the equivalent reference sensitivity receiver performance is increased by the factor MSD:

$$P_{\tilde{y}} = MSD \cdot P_{RefSens} = SNR_{RefSens} \cdot (P_{\tilde{x}} + P_{NoiseFloor})$$

Hence,

$$MSD = \frac{P_{\tilde{x}}}{P_{NoiseFloor}} + 1$$

and

$$MSD\_dB = 10 \cdot log10(\frac{P_{\tilde{x}}}{P_{NoiseFloor}} + 1)$$

For a given UE transceiver design or a stock keeping unit (SKU) the receiver noise floor level, $P_{NoiseFloor}$ can be characterized for all relevant receiver configurations by pre-determination of the reference sensitivity level, $P_{RefSens,}$ in case of a received interference free DL Rx signal.

Since $SNR_{RefSens}$, which is the SNR resulting in reference sensitivity receiver performance requirements, typically given in % of max throughput, is known by design and typically verified by pre-preproduction receiver characterization, the receiver noise floor level is given by:

$$P_{NoiseFloor} = \frac{P_{RefSens}}{SNR_{RefSens}}$$

or in dBm:

$$P_{NoiseFloor}[dBm] = P_{RefSens}[dBm] - SNR_{RefSens}[dBm]$$

In summary, since $P_{NoiseFloor}$ is assumed known a priori the estimation of MSD is an exercise in determining the self-interference power, Px.

MSD degradation and corresponding relaxation as proposed in the specifications (38.101-1) are based on worst case performance with maximum transmit power.

UEs with improved MSD are expected to have MSD values to report to the network without any agreed additional signal from NW on how the UE is to determine the right type and value of the MSD.

In the following specification and claims the term "operational situation" shall be interpreted as any UE call configuration set-up that may result in maximum sensitivity degradation. For example, the operational situation may be related to an environmental condition of the apparatus, some examples of which are provided in the following.

MSD depends on numerous sources which can differ from design to design, from one PCB layout to another. Some of those sources can be, for example, PCB isolation, Harmonic suppression, and antenna isolation.

MSD may also depend on the near field environment of the UE. For example, users grip and changes in the grip may affect the MSD as well as the location of the UE with respect to the user, for example distance of the UE from user's head. Thus, the MSD can change sporadically and according to configuration. While it is possible to include certain margin in static values for MSD in the UE memory for MSD reporting that accounts for antenna isolation, it may not be sufficiently accurate down to a dB resolution, since grip, head and user impacts may alter the antenna behavior significantly.

If static MSD reporting is in use i.e. the UE will have to report the MSD based on the static data stored in the UE, this may not always indicate a correct MSD value during lifetime of the UE and in different usage situations.

Such stored MSD values may be too conservative, which means the NW may skip the carrier aggregation (CA) grant as the MSD value reported by the UE may not be good enough, or more concerningly the UE may report a too optimistic MSD value, in which case the NW may grant a CA configuration, that moments later is dropped, since the UE generates too much self-interference, i.e., even more than the UE has indicated through the MSD reporting.

In the following, some embodiments will be described which alleviate the problems mentioned above.

In accordance with an embodiment, a UE measures MSD during runtime at intervals, for example after receiving a request from a network, or when a predetermined condition in the UE is fulfilled. Some examples of such predetermined conditions are time passed since last measurement, an ongoing call, after switching on the UE, just to mention only few. Measuring the MSD during runtime may enable the UE to optimize the MSD value according to the user in combination with the configuration and conditions the NW sets in choice of CA, channel allocation and channel BW.

Some benefits may be both for the UEs and the NW/gNBs.

The UEs may benefit due to enabling characterize individual UE performance including user impact/coupling and updating of the initial prestored/production data containing MSD values set by the manufacturer. In a typical mass production set-up the pre-characterized manufacturer data are worst case MSD values since they must include safety margins to account for user impact/coupling and manufacturing tolerances.

The NW/gNBs may benefit due to having UEs that optimize the MSD by increasing the accuracy and lowering the margins of the reported MSD values to match the actual performance of the individual UEs which increases NW capacity.

The pre-characterized manufacturer data are worst case MSD values since they must include wide safety margins to account for variations caused by e.g. user impact/coupling and manufacturing tolerances. Therefore, by characterizing the MSD performance of individual UEs in the field autonomously (no NW assistance in any way) during product lifetime the safety margins are minimized and expensive individual MSD calibration of UEs during mass production may be avoided.

The NW capacity may also increase as the reported MSD values may have increased accuracy and may match the actual MSD performance of the individual UEs. Thereby the NW can tailor the call-setup configuration to match the performance of individual UEs.

No Network Assistance and scheduling of measurements gaps is required. The method is completely autonomous at the UE.

In summary some of the main advantages of the MSD measurement during lifetime of the UE are the following. Factory default MSD margins can be reduced to match user impact and component tolerances over time; the reported MSD values may be optimized per individual UEs and not per UE SKU; the accuracy of MSD value reporting to the NW may be improved to match actual UE performance; NW capacity may be optimized; it may be avoided that the UE may report a too optimistic MSD value, in which case the NW may grant a CA configuration, that moments later is subject to call-drop due to poor performance, since the UE generates more self-interference that indicated in the MSD reporting.

One difference between MSD values optimized per UE and a common set of MSD values is that a user equipment may have a common set of MSD values valied e.g. for a certain country specific version and used on all Ues in that country, whereas MSD values optimized per individual UEs would mean that each and every user equipment may individually improve and adapt its MSD.

In accordance with an embodiment the self-interference measurement procedure runs occasionally throughout the UE lifetime, hence any MSD changes due to e.g. component ageing, mechanical changes and different user grip of the UE may be tracked and reported to the NW.

In accordance with an embodiment, the UE identifies MSD affected band combinations (BC), such as CA/EN-DC/NR-DC combinations. The UE should have the ability to identify an MSD affected band combination (BC), either through NW signaling when a demand for reporting and MSD value is requested, or through a lookup in the UE memory that contains supported BC's affected by MSD.

The UE reports the MSD value to the NW. Upon the first registration and BC assignment this may be the factory default MSD value. At a later request from the NW this MSD will change according to new UE data from the measurement optimization process.

Data containing the MSD values may be updated after the UE has performed MSD measurements during operation of the UE, e.g. as follows.

After the UE has reported the existing MSD value found in the UE memory it applies runtime measurements of the MSD types supported and update the internal MSD data. Hence, at a later request from the NW the updated MSD values will be reported. This procedure may run throughout the UE lifetime.

The self-interference measurement example method described in the following is applied at baseband after a call is established, where the UE is configured with an MSD affected band combination .

Based on the type of self-interference to be estimated various methods can be utilized at the UE. E.g., in case of receiver sensitivity degradation due to harmonic mixing and UL harmonics the power of the self-interference can be estimated by cross correlation of known reference signal and the received signal of the victim band at baseband.

During the call the reference signal is generated based on the UL harmonics/harmonic mixing combination that results in generation of self-interference at the victim band identified.

At the UE receiver the reference signal is then correlated with the baseband Rx signal to extract an estimate of the self-interference power, which is then used for MSD calculation.

The updated MSD values are then calculated run-time until call termination and stored in internal UE memory ready for next NW reporting. This MSD measurement procedure may run throughout the UE lifetime.

As a detailed example of UE self-interference measurements consider the UL signal transmitted by the UE at the RF carrier. The equivalent complex baseband signal, $x(t) = I(t) + jQ(t)$, for OFDM (Orthogonal Frequency Division Multiplexing) can be described as:

$$x(t) = \sum_{k=0}^{N-1} X_k e^{j2\pi\Delta fkt}, \ 0 \le t < T$$

where

$X_k$ are the transmitted subcarrier symbols,
N is the number of subcarriers,
$k$ is the subcarrier index,
$\Delta f$ is the subcarrier spacing,
T is the OFDM symbol time, where $\Delta f \cdot T = 1$

The modulated passband signal, $s(t)$, at the RF carrier can then be written as:

$$s(t) = I(t) \sqrt{2} \cos(2\pi f_c) - Q(t)\sqrt{2} \sin(2\pi f_c)$$

where $f_c$ is the carrier frequency.
Equivalently, $s(t)$ can be expressed directly as a function of the equivalent complex baseband signal, $x(t) = I(t) + jQ(t)$:

$$s(t) = Re[\, x(t) \, e^{-j2\pi f_c t} \,]$$

where the $Re[]$ operator returns the real part of a complex expression.
A non-linearity (e.g. a PA) causing self-interference due to harmonic distortion can be modelled as:

$$s_{out}(t) = k_1 s(t) + k_2 \, s^2(t) + \ldots + k_n \, s^n(t)$$

where the factors $k_1, k_2, \ldots, k_n$ depend on the PA power level, antenna, PCB isolation etc.
The $n^{\text{th}}$ harmonic self-interference signal at a RF victim band can be expressed as:

$$Re[k_n \, x^n(t) \, e^{-jn2\pi f_c t} \,]$$

Hence, at baseband the equivalent complex signal corresponding to self-interference from the $n^{\text{th}}$ harmonic UL RF carrier is:

$$\tilde{x}(t) = x^n(t)$$

For the UE receiving a signal located at the RX victim band at RF, the equivalent complex baseband signal, $r_x(t)$, can be described as:

$$r_x(t) = \tilde{y}(t) + \tilde{x}(t) + Z(t)$$

where

$\tilde{y}(t)$ is the gNB DL baseband signal received through a radio channel at the UE,
$\tilde{x}(t)$ is the self-interference originating from the UE UL signal,
$Z(t)$ is AWGN

The following procedure is an example for estimation of self-interference due to UL harmonics or harmonic mixing:

First, a reference interfering signal in the RX victim band, $x_{ref}(t)$ is calculated as follows:

$$x_{ref}(t) = x^{nh}(t) \pm x^{mh}(t)$$

where *nh* and *mh* are integer constants determining the actual UL harmonics/harmonic mixing combination

For example, in case of 2nd order UL harmonics self-interference at the victim band identified, the reference signal is calculated as:

$$x_{ref}(t) = x^2(t)$$

Second, the self-interference power, $P_{\tilde{x}}$ can be estimated as follows:

$$P_{\tilde{x}} = \left| \frac{r_x^H(t) * x_{ref}(t)}{N_{rx}} \right|^2$$

where,

* denotes convolution

$r_x^H(t)$ is the Hermitian transpose of $r_x(t)$

$N_{rx}$ is the number of IQ samples of the received BB signal

The MSD can now be calculated since $P_{NoiseFloor}$ can be assumed known *a priori*:

$$MSD\_dB = 10 \cdot log10(\frac{P_{\tilde{x}}}{P_{NoiseFloor}} + 1)$$

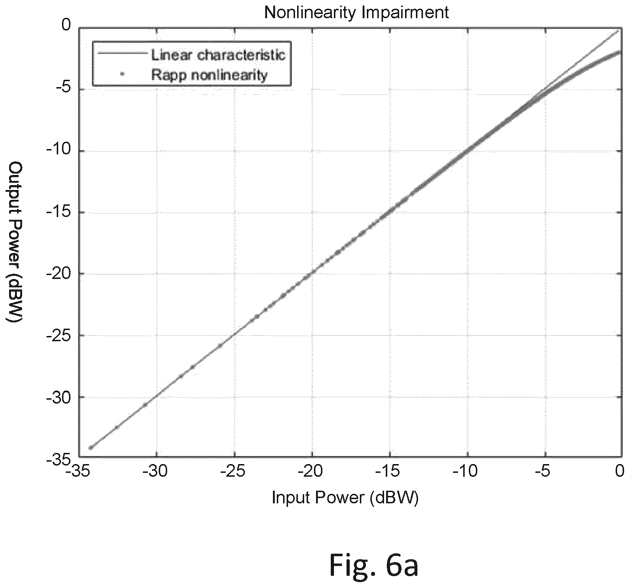

Fig. 6a shows an example where the UE transmitter PA is simulated as a Rapp non-linearity impairment. The straight line indicates linear charactieristics and the dots indicate simulated UE transmitter PA input power vs. Output power [dBW].

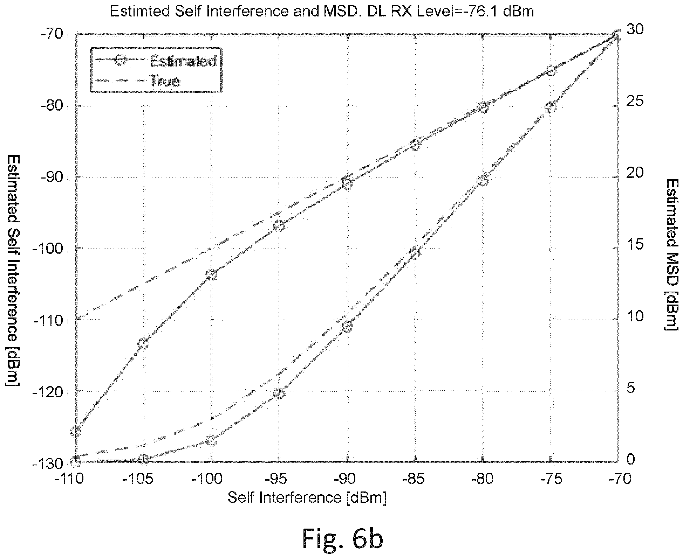

Fig. 6b shows an estimation example where the receiver noise floor level, $P_{NoiseFloor}$ is -100 dBm. The simulation parameters are the following:

Channel bandwidth: 10MHz
Subcarrier spacing: 30kHz
$P_{NoiseFloor}$: -100 dBm
PDL Rx: -76.1 dBm
PA model: Rapp model to match the characteristics of the model from TR 38.803 Annex A.1.

The upper line with circles represents the estimated self interference and the upper dotted line represents true (simulated) self interference vs. power level (y-axis on the left), the lower line with circles represents the estimated MSD and the lower dotted line represents true (simulated) MSD vs. power level (y-axis on the right).

As can be seen by comparing x-axis to left y-axis (upper curve) the estimated self-interference power in this example is substantially accurate down to the receiver noise floor even for estimated MSD values close to 0 dB (right y-axis, lower curve). This leads to estimation of MSD values between 0 and 30 dB with a maximum estimation error of ~1.4 dB at -100 dBm and a very small estimation errors for high MSD values.

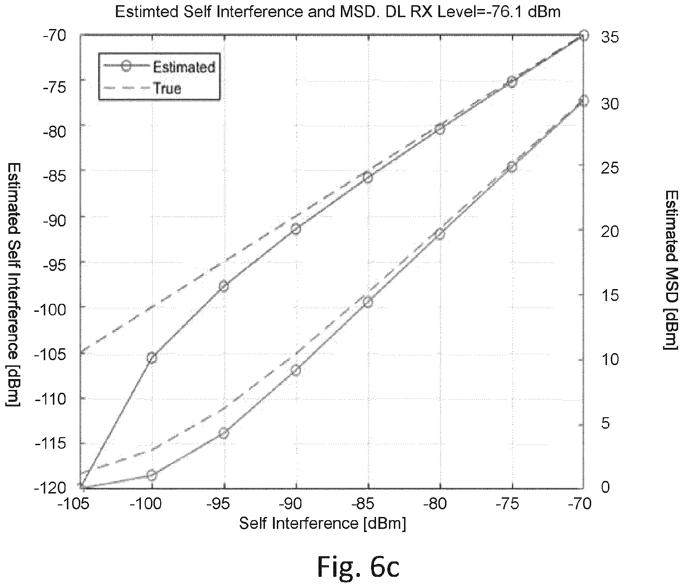

The cross-correlation method used here for MSD estimation may have the further advantage that it is very robust to various external interference types. E.g., if co-channel interference is present during the self-interference measurement, the MSD estimation remains mostly unaffected as the cross-correlation method can estimate MSD values accurately even when the self-interference power is much lower than the combined power of the DL Rx level plus interference as illustrated in Fig. 6c where the downlink Rx level = -76.1 dBm and a Cochannel interference signal with a power level of -85dBm is added.

This may make the method superior to interference estimation, which is affected by co-channel interference or similar interference effects different from the self-interference i.e. SNR based estimations.

After estimation of the self-interference power, the internal MSD tables can then be updated based on the measured sensitivity degradation by extrapolating the MSD values to match the maximum transmit power. Extrapolation may be required because the self-interference measurement may not always happen at the maximum transmit power. A simple method to extrapolate is:

$$MSD\_dB_{maxpow} = MSD_{dB} + PowBackoff * HarmonicOrder$$

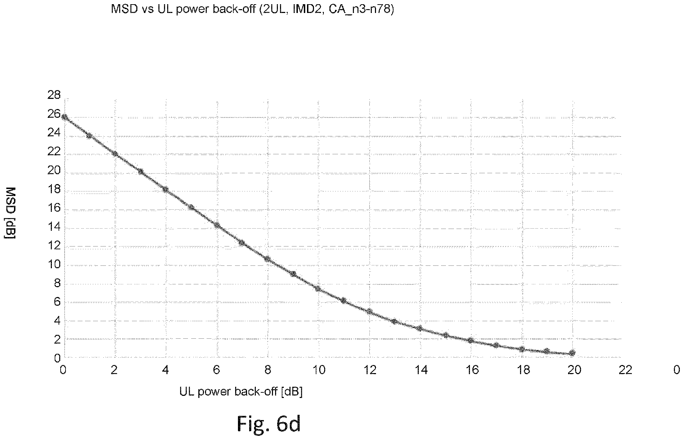

Alternatively, the UE can extrapolate based on a pre-characterized relation between MSD and power back-off, an example of which is provided in Fig. 6d for $2^{nd}$ order harmonic distortion which shows a relation 2:1 between UL power back off and the level of MSD.

In summary the above example details a method to estimate the self-interference power, $P_{\tilde{x}}$, where the victim band is subject to UL harmonics/harmonic mixing, but other methods can be utilized at the UE e.g., using special UL signals that enables measurements of all types of self-interference.

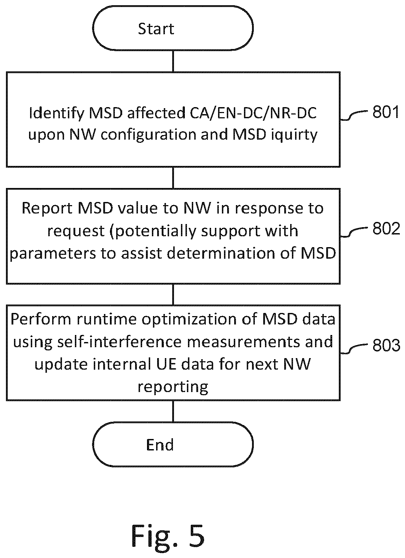

The MSD reporting may use the tables or alternatively use memory allocation and report the MSD upon NW request that are evolving MSD values as the UE continuously determines the MSD for MSD affected CA/EN-DC/NR-DC combinations. The procedure in accordance with an embodiment is shown in Fig. 5. The UE identifies 801 MSD affected CA/EN-DC/NR-DC upon NW configuration and MSD inquiry. The UE reports 802 the measured MSD value to NW in response to the request. It may potentially be supported with parameters to assist determination of MSD. The UE performs 803 runtime optimization of MSD data using self-interference measurements and updates internal UE data for a next NW reporting.

In certain embodiments, the UE may perform MSD reporting to disclose the MSD value to signal the network based on configuration inputs of operational bands, channel allocation, and bandwidth allocation.

More particularly, certain embodiments may allow a UE to implement a method that selects the MSD relaxation value for a UE based on the measured MSD value. The UE can report the MSD value to the network in response either to a request, or in response to a CA/EN-DC/NR-DC configuration for which the UE is to report the MSD value.

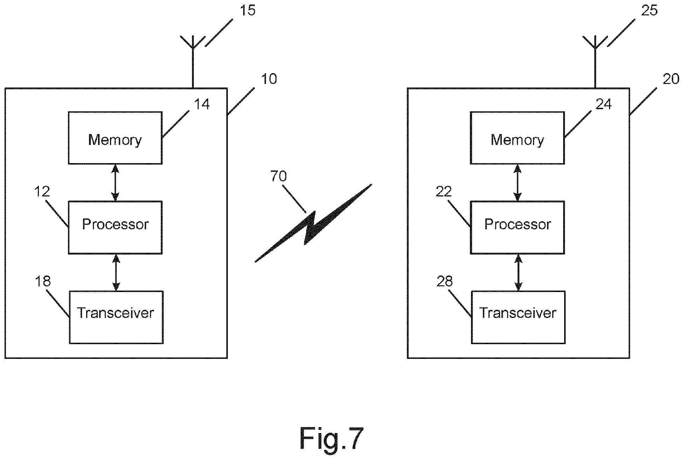

Fig. 7 illustrates an example of a system that includes an apparatus 10, according to an embodiment. In an embodiment, apparatus 10 may be a node, host, or server in a communications network or serving such a network. For example, apparatus 10 may be a network node, satellite, base station, a Node B, an evolved Node B (eNB), 5G Node B or access point, next generation Node B (NG-NB or gNB), TRP, HAPS, integrated access and backhaul (IAB) node, and/or a WLAN access point, associated with a radio access network, such as a LTE network, 5G or NR. In some example embodiments, apparatus 10 may be gNB or other similar radio node, for instance.

It should be understood that, in some example embodiments, apparatus 10 may include an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a mid-haul interface, referred to as an F1 interface, and the DU(s) may have one or more radio unit (RU) connected with the DU(s) over a front-haul interface. The DU may be a logical node that includes a subset of the gNB functions, depending on the functional split option. It should be noted that one of ordinary skill in the art would understand that apparatus 10 may include components or features not shown in Fig. 7.

As illustrated in the example of Fig. 7, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, or any other processing means, as examples. While a single processor 12 is shown in Fig. 7, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to static reporting by a user equipment of maximum sensitivity degradation and relaxation values thereof based on specific network configurations and caapabilities of the user equipment.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be include any combination of random access memory (RAM), read only memory (ROM), static storage such as a magnetic or optical disk, hard disk drive (HDD), or any other type of non-transitory machine or computer readable media, or other appropriate storing means. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15, or may include any other appropriate transceiving means. The radio interfaces may correspond to a plurality of radio access technologies including one or more of global system for mobile communications (GSM), narrow band Internet of Things (NB-IoT), LTE, 5G, WLAN, Bluetooth (BT), Bluetooth Low Energy (BT-LE), near-field communication (NFC), radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (via an uplink, for example).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device), or an input/output means.

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry/means or control circuitry/means. In addition, in some embodiments, transceiver 18 may be included in or may form a part of transceiver circuitry/means.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be or may be a part of a network element or RAN node, such as a base station, access point, Node B, eNB, gNB, TRP, HAPS, IAB node, relay node, WLAN access point, satellite, or the like. In one example embodiment, apparatus 10 may be a gNB or other radio node, or may be a CU and/or DU of a gNB. According to certain embodiments, apparatus 10 may be controlled by memory 14 and processor 12 to perform the functions associated with any of the embodiments described herein. For example, in some embodiments, apparatus 10 may be configured to perform one or more of the processes depicted in any of the flow charts or signaling diagrams described herein, such as those illustrated in Figs. 6-8 and 10, or any other method described herein. In some embodiments, as discussed herein, apparatus 10 may be configured to perform a procedure relating to providing static reporting by a user equipment of maximum sensitivity degradation and relaxation values thereof based on specific network configurations and caapabilities of the user equipment, for example.

Fig. 7 further illustrates an example of an apparatus 20, according to an embodiment. In an embodiment, apparatus 20 may be a node or element in a communications network or associated with such a network, such as a UE, communication node, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, a watch or other wearable, a head-mounted display (HMD), a vehicle, a drone, a medical device and applications thereof (e.g., remote surgery), an industrial device and applications thereof (e.g., a robot and/or other wireless devices operating in an industrial and/or an automated processing chain context), a consumer electronics device, a device operating on commercial and/or industrial wireless networks, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 7.

As illustrated in the example of Fig. 7, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 7, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can include any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDM symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, SL UE, relay UE, mobile device, mobile station, ME, IoT device and/or NB-IoT device, or the like, for example. According to certain embodiments, apparatus 20 may be controlled by memory 24 and processor 22 to perform the functions associated with any of the embodiments described herein, such as one or more of the operations illustrated in, or described with respect to, Figs. 6-8 and 10, or any other method described herein. For example, in an embodiment, apparatus 20 may be controlled to perform a process relating to providing static reporting by a user equipment of maximum sensitivity degradation and relaxation values thereof based on specific network configurations and caapabilities of the user equipment, as described in detail elsewhere herein.

In some embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of any of the operations discussed herein.

In view of the foregoing, certain example embodiments provide several technological improvements, enhancements, and/or advantages over existing technological processes and constitute an improvement at least to the technological field of wireless network control and/or management. Certain embodiments may have various benefits and/or advantages. For example, in certain embodiments factory default MSD margins may be reduced to match user impact and component tolerances over time. The reported MSD values may be optimized per individual UEs and not per UE SKU. Also the accuracy of MSD value reporting to the NW may be improved to match actual UE performance, and NW capacity may be optimized.

In some embodiments it may be possible to avoid that the UE reports a too optimistic MSD value, in which case the NW may grant a CA configuration, that moments later is dropped due to poor performance, since the UE generates more self-interference that indicated in the MSD reporting

The self-interference measurement procedure may run throughout the UE lifetime, hence any MSD changes due to e.g. component ageing and mechanical changes will be tracked and reported to the NW.

In some embodiments network assistance and scheduling of measurements gaps etc. is not required, as the method is completely autonomous by the UE.

In some example embodiments, the functionality of any of the methods, processes, signaling diagrams, algorithms or flow charts described herein may be implemented by software and/or computer program code or portions of code stored in memory or other computer readable or tangible media, and may be executed by a processor.

In some example embodiments, an apparatus may include or be associated with at least one software application, module, unit or entity configured as arithmetic operation(s), or as a program or portions of programs (including an added or updated software routine), which may be executed by at least one operation processor or controller. Programs, also called program products or computer programs, including software routines, applets and macros, may be stored in any apparatus-readable data storage medium and may include program instructions to perform particular tasks. A computer program product may include one or more computer-executable components which, when the program is run, are configured to carry out some example embodiments. The one or more computer-executable components may be at least one software code or portions of code. Modifications and configurations required for implementing the functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium. The term "non-transitory" as used herein, is a limitation of the medium itself (i.e. tangible, not a signal) as opposed to a limitation on data storage persistency (e.g. RAM vs. ROM).

In other example embodiments, the functionality of example embodiments may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality of example embodiments may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein may apply to both singular and plural implementations, regardless of whether singular or plural language is used in connection with describing certain embodiments. For example, an embodiment that describes operations of a single network node may also apply to example embodiments that include multiple instances of the network node, and vice versa.

One having ordinary skill in the art will readily understand that the example embodiments as discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of example embodiments.

PARTIAL GLOSSARY:

| | |
|---|---|
| CA | Carrier Aggregation |
| DL | Downlink |
| EN-DC | LTE, NR Dual connectivity |
| IMD | Intermodulation distortion (Number at end can indicate harmonic order i.e 3 = 2*UL1+1*UL2) |
| MSD | Maximum sensitivity degradation |
| RRC | Radio Resource Control |
| SKU | Stock Keeping Unit differentiating regional versions |
| UE | User Equipment |
| UL | Uplink |

**Claims**

1. An apparatus, comprising:

   at least one processor; and
   at least one memory storing instructions that, when executed by the at least one processor, cause the apparatus at least to:

   receive a request message related to capability of the apparatus, wherein the request message includes maximum sensitivity degradation information of the apparatus corresponding to an operational situation of the apparatus;
   respond to the request message with a response message, wherein the response message indicates the maximum sensitivity degradation value corresponding to said operational situation of the apparatus;
   utilize self-measurements during said operational situation of the apparatus to determine a new maximum sensitivity degradation value which replaces the current maximum sensitivity degradation value corresponding to the operational situation of the apparatus.

2. The apparatus according to claim 1, said at least one memory storing instructions that, when executed by the at least one processor, cause the apparatus at least to determine the new maximum sensitivity degradation value at intervals.

3. The apparatus according to claim 1 or 2, said at least one memory storing instructions that, when executed by the at least one processor, cause the apparatus at least to determine the new maximum sensitivity degradation value after receiving a request from the network.

4. The apparatus according to claim 1, 2 or 3, wherein the operational situation is related to an environmental condition of the apparatus.

5. The apparatus according to any of the claims 1 to 4, said at least one memory storing instructions that, when executed by the at least one processor, cause the apparatus at least to identify one or more band combinations affected by maximum sensitivity degradation.

6. The apparatus according to any of the claims 1 to 5, wherein the self-measurement is self-interference measurement, said at least one memory storing instructions that, when executed by the at least one processor, cause the apparatus at least to select, based on a type of the self-interference to be estimated, a method for the estimation.

7. The apparatus according to claim 6, wherein the type of the self-interference measurement is receiver sensitivity degradation, and the estimation method is cross correlation at a baseband of a known reference signal and the received signal of a band affected by the maximum sensitivity degradation.

8. The apparatus according to claim 7, said at least one memory storing instructions that, when executed by the at least one processor, cause the apparatus at least to generate, during a call, the reference signal based on uplink harmonics or harmonic mixing combination that results in generation of self-interference at the identified band affected by the maximum sensitivity degradation.

9. The apparatus according to claim 7 or 8, said at least one memory storing instructions that, when executed by the at least one processor, cause the apparatus at least to correlate the reference signal with the baseband signal to extract an estimate of a self-interference power, and to use the estimate of the self-interference power for calculation of the maximum sensitivity degradation.

10. The apparatus according to any of claims 1 to 9, wherein the apparatus comprises an antenna.

11. A method comprising:

receiving a request message related to capability of the apparatus, wherein the request message includes maximum sensitivity degradation information of the apparatus corresponding to an operational situation of the apparatus;
responding to the request message with a response message, wherein the response message indicates the maximum sensitivity degradation value corresponding to said operational situation of the apparatus; and
utilizing self-measurements during said operational situation of the apparatus to determine a new maximum sensitivity degradation value which replaces the current maximum sensitivity degradation value corresponding to the operational situation of the apparatus.

12. The method according to claim 11, comprising determining the new maximum sensitivity degradation value at intervals.

13. The method according to any of claims 11 or 12 comprising determining the new maximum sensitivity degradation value after receiving a request from a network.

14. The method according to any of claims 11 to 13, wherein the operational situation is related to environmental condition of the apparatus.

15. The method according to claim 14, wherein the first operational situation is related to an environmental condition of the apparatus at a manufacturing stage, and the second operational situation is related to environmental condition of the apparatus during use.

Fig. 1

Fig. 2

Fig. 3

Fig. 4

```
                    ┌─────────────────┐
                    │      Start      │
                    └────────┬────────┘
                             │
        ┌────────────────────┴─────────────────┐
        │ Identify MSD affected CA/EN-DC/NR-DC  │──── 801
        │ upon NW configuration and MSD iquirty │
        └────────────────────┬─────────────────┘
                             │
        ┌────────────────────┴─────────────────┐
        │ Report MSD value to NW in response to │
        │     request (potentially support with │──── 802
        │ parameters to assist determination of MSD│
        └────────────────────┬─────────────────┘
                             │
        ┌────────────────────┴─────────────────┐
        │ Perform runtime optimization of MSD data│
        │ using self-interference measurements and│──── 803
        │    update internal UE data for next NW  │
        │               reporting                 │
        └────────────────────┬─────────────────┘
                             │
                    ┌────────┴────────┐
                    │       End       │
                    └─────────────────┘
```

# Fig. 5

Fig. 6a

Fig. 6b

Fig. 6c

MSD vs UL power back-off (2UL, IMD2, CA_n3-n78)

Fig. 6d

Fig.7

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/225080 A1 (NG MAN HUNG [GB] ET AL) 14 July 2022 (2022-07-14) | 1-6, 10-15 | INV. H04B17/345 |
| Y | * paragraph [0080] - paragraph [0105]; figures 8,9 * | 7-9 | |
| Y | APPLE: "UE SIR measurement for network scheduling assistance", 3GPP DRAFT; R4-2117986, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Online; 20211101 - 20211112 22 October 2021 (2021-10-22), XP052069531, Retrieved from the Internet: URL:https://ftp.3gpp.org/tsg_ran/WG4_Radio /TSGR4_101-e/Docs/R4-2117986.zip R4-2117986 UE SIR measurement for network scheduling assistance.docx [retrieved on 2021-10-22] * section 2 * | 7-9 | |
| A | WO 2022/260381 A1 (LG ELECTRONICS INC [KR]) 15 December 2022 (2022-12-15) * the whole document * | 1-15 | **TECHNICAL FIELDS SEARCHED (IPC)** H04B |

-/--

The present search report has been drawn up for all claims

| Place of search | Date of completion of the search | Examiner |
|---|---|---|
| The Hague | 18 June 2024 | Losada Corderí, Iker |

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | T-MOBILE USA: "Discussion on the MSD: One operator's perspective", 3GPP DRAFT; R4-2119375, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Electronic Meeting; 20211101 - 20211112 22 October 2021 (2021-10-22), XP052070702, Retrieved from the Internet: URL:https://ftp.3gpp.org/tsg_ran/WG4_Radio /TSGR4_101-e/Docs/R4-2119375.zip R4-2119375_MSD.docx [retrieved on 2021-10-22] * sections 2 and 3 * ----- | 1-15 | |

**TECHNICAL FIELDS SEARCHED (IPC)**

The present search report has been drawn up for all claims

| Place of search | Date of completion of the search | Examiner |
|---|---|---|
| The Hague | 18 June 2024 | Losada Corderí, Iker |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 15 4742

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2024

| Patent document cited in search report | | Publication date | Patent family member(s) | | Publication date |
|---|---|---|---|---|---|
| US 2022225080 | A1 | 14-07-2022 | AU | 2020250940 A1 | 30-09-2021 |
| | | | CN | 113678550 A | 19-11-2021 |
| | | | EP | 3949609 A1 | 09-02-2022 |
| | | | US | 2022225080 A1 | 14-07-2022 |
| | | | WO | 2020201617 A1 | 08-10-2020 |
| WO 2022260381 | A1 | 15-12-2022 | EP | 4352993 A1 | 17-04-2024 |
| | | | KR | 20240018448 A | 13-02-2024 |
| | | | WO | 2022260381 A1 | 15-12-2022 |

EPO FORM P0459

For more details about this annex : see Official Journal of the European Patent Office, No. 12/82